# EUROPEAN PATENT APPLICATION

(11) **EP 1 502 525 A1**
(43) Date of publication of application: **02.02.2005**
(21) Application number: 03016869.4
(22) Date of filing: 24.07.2003
(51) Int. Cl.: A47J 27/21, A47J 31/30

(54) **Appliance for the preparation of hot beverages, infusions and the like**

(71) Applicant: BARDAZZI, Bruno, 50037 San Piero a Sieve, Firenze (IT); Gangotra, Vinod Kumar, Nottingham - U.K. (GB)
(72) Inventor: BARDAZZI, Bruno, 50037 San Piero a Sieve, Firenze (IT); Gangotra, Vinod Kumar, Nottingham - U.K. (GB)
(74) Representative: Porsia, Attilio, Dr.

(57) **Abstract**

Electrical appliance for hot beverages such as infusions and the like, comprising a first section (1,4) equipped with electrical heating means (201,304) for a fluid, and power supply means (3) for said electrical heating means, and a second section (2,5,6) comprising containing means (2,5,6) of the heated fluid, said first and said second section being connectable to each other in a releasable manner, said first section (1,4) being essentially subdivided in a housing chamber (121,224) of the electrical heating means (201,304) and in a fluid heating chamber (111,104) by a partitioning wall (101,204), made of a heat conductive material, while the heating means are in contact with said wall (101,204).

## Description

This invention relates to the appliances for the preparation of hot beverages, infusions and the like, and in particular it refers to electrical appliances.

Such appliances have a broad range of application and may exhibit characteristics even widely diverging from each other; part of this sector is in fact made up of coffee machines, both of a type including a boiler heated by direct exposure to heat and electrical types including boilers of various kinds and shapes, as well as appliances destined for the production of steam usable for preparing punch, cappuccini and similar beverages.

The availability of the various appliances destined for diverse functions constitutes in itself a disadvantage, as it renders them of scarcely practical use, and requires certain possibilities from a viewpoint of space. Moreover, as regards electrical appliances in particular, which are going to prevail over those destined to be heated on traditional gas ranges, there is a particularly felt need for appliances wherein the speed of heating is in any case coupled with easy handling, owing, among other things, to the possibility of achieving appliances whose elements will not overheat, so as to avoid difficulties in handling them, with a consequently reduced user comfort. The usage of plastics appears to be appreciable in this regard, as it allows, among other things, to endow the appliance with a greater variety of colors and designs.

Moreover, in the realm of electrical appliances assigned to such functions, it is worth mentioning the problem relating to the possibility of providing a power supply to the heating means, and of subsequently being able to detach the appliance from its power supply means in a simple and rapid manner.

The scope of this invention is therefore to provide an electrical appliance for preparing hot beverages, such as for instance cappuccino, coffee, tea, chocolate or the like, which allows it, by using appropriate accessories, to prepare various hot beverage requiring various modes of preparation.

A further scope of this invention is an appliance that is capable, despite attaining considerable temperatures, of being grasped without concern for the protection of the user's hands.

An object of this invention is thus an electrical appliance for preparing hot beverages such as infusions and the like, comprising a first section fitted with electrical means for fluid heating and means for providing a power supply to the electrical heating means, and a second section comprising means for containing the heated fluid, where said first section and said second section are connectible to each other in a releasable manner, and said first section is essentially subdivided in an electrical circuit housing chamber and in a fluid heating chamber by a partition made of heat conducting material, on which said heating means are mounted.

Advantageously, the outer walls of said first and of said second section are made from thermally insulating material, preferably of a plastic material or the like.

According to a first embodiment, said appliance may comprise a filter for coffee powder between said first and said second section. The appliance may also assume the configuration of a water boiler, if the second section constitutes an extension of the walls of said first section, to be capable of augmenting its capacity. Moreover, if the second section consists in a pressure-tight bell fitted with steam dispensing means, the apparatus is capable of providing pressurized aqueous steam for preparing cappuccini, punch beverages and the like.

The electrical circuit of the heating means conveniently comprises a thermostat as well as means of controlling said thermostat, said means being detachable from said circuit.

Said first section also comprises a safety valve, which may advantageously be hidden under a mantle made of thermally insulating material, fitted with appropriate holes for discharging the eventual fluid under pressure exiting from said valve.

Further advantages and characteristics will become evident from the following description of a few embodiments of the appliance according to this invention, presented for exemplifying and nonlimiting purposes with reference to the attached drawings, in which:
Figure 1 is a partly sectioned side elevational view of a first embodiment of the appliance according to this invention,
Figure 2 is a view, similar to that of Figure 1, of an alternative embodiment of the appliance of the invention,
Figure 3 is an enlarged sectional view of a detail of the heating means and of the power supply means of the appliance according to the invention,
Figure 4 is a partly sectioned elevational side view of a second embodiment of the appliance of the invention, and
Figure 5 is a partly sectioned elevational side view of a third embodiment of the appliance of the invention.

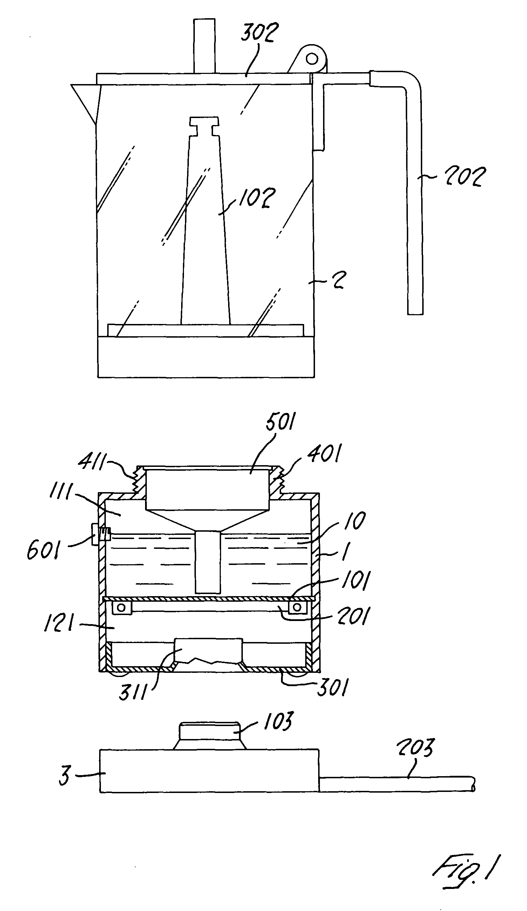

Figure 1 illustrates the appliance according to this invention; in this embodiment, the appliance is used as an electrical coffee machine. No. 1 designates the essentially cylindrical container body of the first section of said appliance, which holds the heating means, in particular the electrical resistance 201, in contact with the metal wall 101 that separates the internal cavity of the body 1 in two chambers 111 and 121 housing the water to be heated 10 and the heating means 201, respectively. The end wall 301 of the body 1 presents an axial recess 311 designed to be coupled to the shank 103 axially protruding from the plate 3 of the power supply means, whose cables 203 allows them to be connected to the electrical power distribution network. At its opposite extremity, the body 1 presents an axially protruding flange 401 fitted with a threaded connection 411 in its lateral wall. A safety valve 601 is provided on the lateral wall of the body 1, corresponding to the water-heating chamber 111; the opening surrounded by the flange 401 is fitted with a coffee powder filter 501.

The container body 2 of the appliance has a conventional construction for coffee machines, being axially fitted with a nozzle 1 delivering the coffee infusion within the container 2 itself, a lid 302 and handling devices 202.

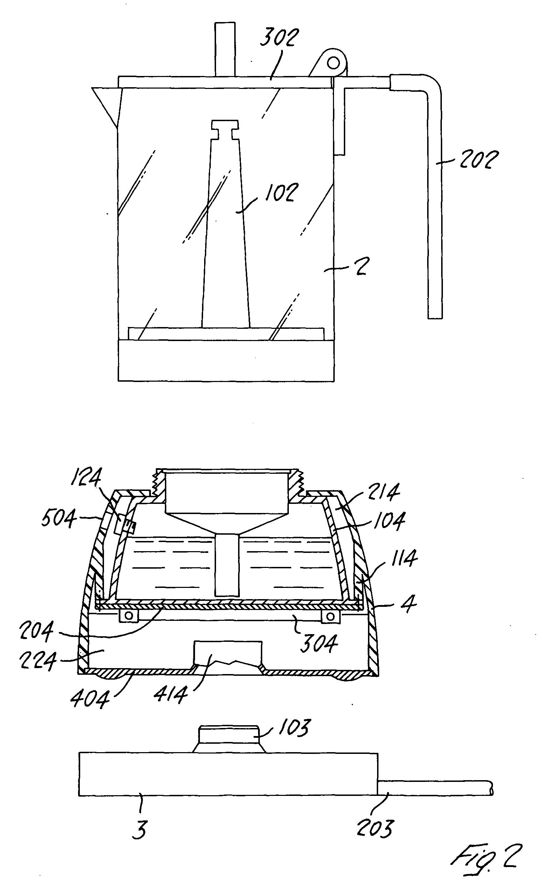

In the variant shown in Figure 2, the body 4 of the first section of the appliance is substantially tapered toward its open extremity. Within the body, there is an axial flange 114 protruding from the lateral wall, which connects to the wall 204 separating said body's internal cavity 4 in two chambers 214 and 224. The chamber 214 houses the boiler 204, whose planar end wall is in contact with the partitioning wall 204 that mounts the resistance 304. The boiler 104 is fitted with a safety valve 124; a hole 504 is provided in the wall of body 4 in correspondence to said valve, to allow venting any pressurized steam, which may exit the valve 124. The end wall 404 of the body 4 presents an axial cavity 414 designed to cooperate with the shank 103 axially protruding from the plate 3 of the power supply means, as in the embodiment described above.

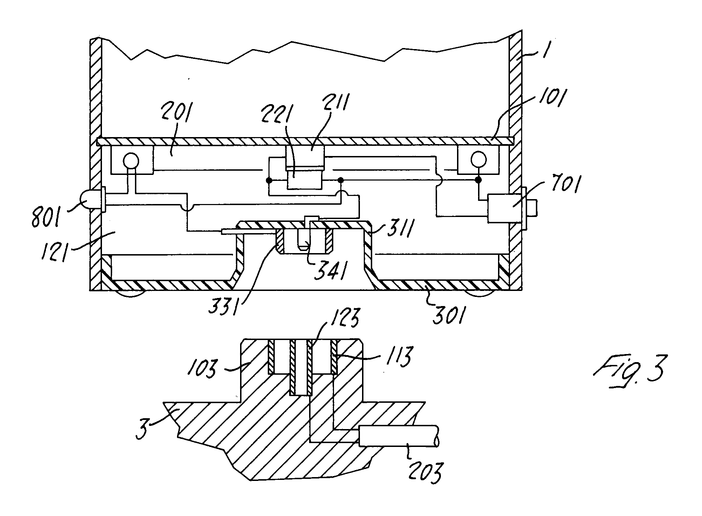

Figure 3 shows the heating means of the electrical appliance according to this invention in detail. The cavity 311 of the rear chamber 301 of the body houses the contacts 331 and 341; these contacts fit into the annular contact elements 113 and 123, respectively, which are coaxially placed into the shank 103 protruding from the plate 3 of the power supply means and connected to the cable 203. One of the contacts is directly connected at one end to the resistance 201, while the other contact connects to it through the thermostat 221, while a controlling resistance 211 is arranged in parallel thereto and fitted within its circuit section with a switch 701. A warning light 801 is also inserted in parallel between the thermostat 221 and the heating resistance 201.

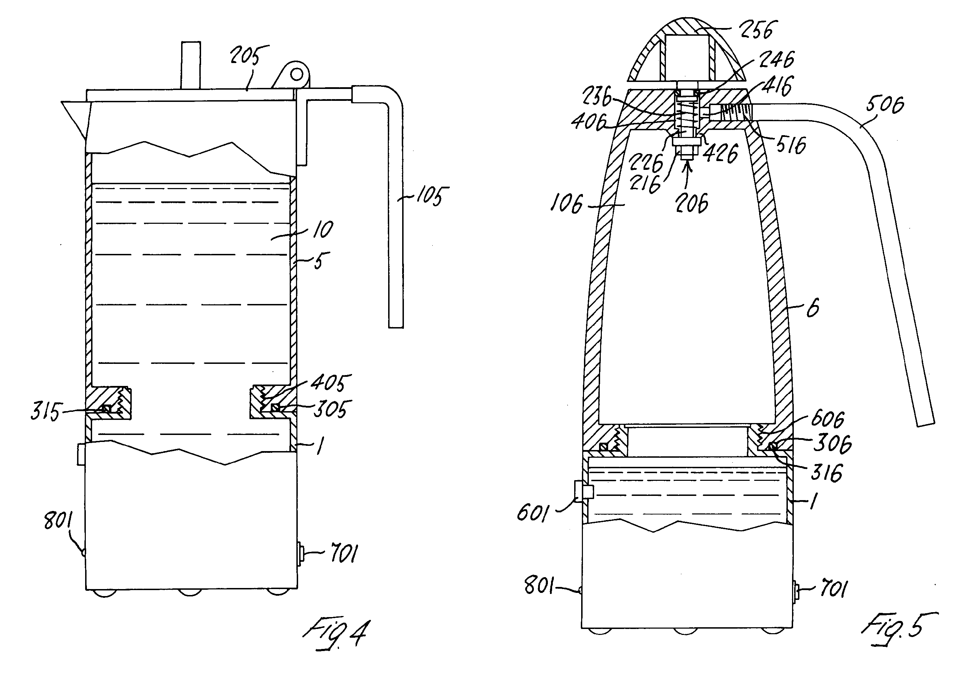

Fig. 4 shows a second embodiment of the appliance according to this invention; equal parts are matched by the same corresponding numerals. The body 1 of the first section of the appliance, identical to that shown in Figure 1 and described above, is coupled to the body 5 of the second section, which is substantially a cylindrical extension of said body 1, equipped with a axially threaded hole 405 cooperating with the threaded flange 401 protruding from said body 1. The rim of said body 5 bearing against the wall of said body 1 carries an annular groove 305 that seats a sealing element 315. The body 5 is further provided with a lid 205 and a handle 105.

Figure 5 shows still another embodiment of the appliance according to this invention; in this case the body 1 of the first section of the appliance, again identical to that described above and shown in Figure 1, is connected to an organ 6 having a substantially bell-shaped form and presenting an axially threaded hole 606 at its extremity, which faces the flange 401 of the body 1 it is coupled to. The seal between the bell 6 and the body 1 is assured by the sealing element 316 inserted into the annular groove 306, which is formed next to the rim of said hole 606.

At its opposite extremity, the bell 6 is provided with a valve 206 fitted into a seat 406. The valve comprises a head 216 resting in its closed position on the rims 426 of said seat, a stem 226 bearing a helical spring 236 and a sealing element 246; the extremity of the stem 226 projecting toward the outside of the bell 6 is connected with a pushbutton 256 actuating the valve. The seat 406 is further provided with a radial conduit 416, the threaded extremity 516 of a delivery spout being inserted therein.

The operation of the appliance according to this invention will be evident from the following. As appears evident both in Figure 1 and in Figure 2, the wall supporting the heating means, meaning the resistance 201, is in direct or indirect contact with the fluid to be heated, generally water. The other body parts of the first section of the appliance, that is the section containing the heating means, may be made of a metallic material, or more preferably of a thermally insulating material, such as for instance a plastic material. Depending on the alternatives, the water may be heated in a metallic boiler 104, as illustrated in Figure 2, or in a chamber whose only metal wall is the one holding the heating means. In the first case the boiler is naturally housed inside an enclosure 4 of plastic material, so that the heating imparted to said boiler is, except to a minimal degree, not detectable from the outside under the user's touch.

Figure 3 illustrates in detail the power supply circuit of the heating means 201, which is housed in the chamber 121 of the body 1. When the thermostat has reached the temperature preset for its opening, the power is cut; the controlling resistance 211 has the function of keeping the thermostat hot, so as to prevent the thermostat, during the cooling phase, from restarting the heating of the resistance 201. This second resistance may also function as a heating element for keeping the already prepared coffee at a non-excessive temperature. On the other hand, in case a further heating of the fluid introduced into the appliance is desired, such as for instance when the same is used in the embodiments shown in Figures 4 and 5, it is practical to disconnect this resistance, so as to allow a new voltage to be applied to the heating resistance.

All parts of the appliance, in all its embodiments, with the exception of the wall holding the heating means, may be made of a thermally insulating material, and preferably of a plastic material. The use of this material allows producing a lightweight appliance, easily and safely handled by the user, which can also be given a decidedly pleasant appearance, as it may utilize far more diversified forms and colors than those accessible when using metallic material. As illustrated in the variant in Figure 2, the safety valve may be hidden inside a mantle of thermally insulating material, in this case on the body 4 of the first section of the appliance, thereby avoiding that a usually very hot projection may come in contact with the user's hands.

The connection with the power supply means may be made in correspondence with any wall of body of the first section of the appliance; however, the illustrated embodiment is held to be preferable, as it allows connecting and disconnecting in a rapid and effective manner, while at the same time minimizing the possibility of dripping liquid on the contacts.

The electrical appliance thus conceived offers a broad range of applications, which renders it far more complete than the appliances commonly on the market; all its embodiments offer the same characteristics of safety and practicality of connecting to a power source, as well as of minimum heating of the surfaces destined to be handled by the user.

## Claims

1. Electrical appliance for preparing hot beverages such as infusions and the like, comprising a first section (1, 4) equipped with electrical means (201, 204) for heating a fluid and power supply means (201, 204) for said electrical heating means, and a second section (2, 5, 6) comprising means for containing (2, 5, 6) the heated fluid, said first section and said second section being connectible to each other in a releasable manner, said first section (1, 4) being substantially subdivided into a housing chamber (121, 224) for the electrical heating means (201, 204) and into a heating chamber (111, 104) for the fluid by a partitioning wall (101, 204) made of heat-conducting material, while the heating means (201, 204) are in contact with said wall (101, 204).

2. Appliance according to claim 1, wherein the outer walls of said first (1, 4) and said second section (2, 5, 6) are made of thermally insulating material, preferably of plastic material or the like.

3. Appliance according to claim 1 or 2, **characterized in that** it comprises, between said first (1, 4) and said second section (2), a funnel-shaped filter (501) for the coffee powder, while said second section comprises a containing body, essentially in the form of a vase, which is axially fitted with a nozzle (102) for delivering a coffee infusion, while said nozzle is in fluid communication with said filter (501).

4. Appliance according to claim 1 or 2, wherein said second section comprises a substantially tubular body (5), connectible to one extremity of the body (1) of said first section by appropriate coupling means.

5. Appliance according to claim 1 or 2, wherein said second section comprises a substantially bell-shaped body (6), coupled to one extremity of the body (1) of said first section, and fitted at its opposite extremity with means for delivering (205, 206) the heated fluid.

6. Appliance according to any of the preceding claims from 1 to 5, wherein the end wall (301, 404) of the body (1, 4) of said first section is provided with an axial cavity (311, 414) mounting the electrical contacts (331, 341), while the power supply means comprise a plate (3) connected to the power supply network, which is fitted with an axially protruding shank (103) holding the electrical contacts (113, 123) destined for coupling to said electrical contacts (331, 341) of said cavity (311, 414).

7. Appliance according to any of the preceding claims from 1 to 6, wherein said heating means comprise a heating resistance (201, 304) arranged in contact with said partitioning wall (101, 204), and a power supply circuit of said resistance comprising a thermostat (221), means of signalling (801) the operation of said heating means, and means of controlling (211) said thermostat (221).

8. Appliance according to claim 7, wherein the branch of the power supply circuit mounting said controlling means (211) is provided with switching means (701) capable of excluding said controlling means (211) from said power supply circuit.

9. Appliance according to claim 7 or 8, wherein said controlling means for said thermostat (221) comprise a controlling resistance (211) of a value substantially lower than that of the heating resistance (201, 304), arranged in contact with said thermostat (211) and in parallel to the same.

10. Appliance according to any of the preceding claims from 1 to 9, wherein said first section comprises a safety valve (601, 124) in correspondence with the heating chamber of the fluid (111, 104).

11. Appliance according to claim 10, wherein said valve (124) is hidden by a mantle (4) made of thermally insulating material, which is provided with at least one discharge hole (504).
